# FASCICULE DE BREVET EUROPEEN

(11) **EP 0 298 868 B1**
(45) Date de publication et mention de la délivrance du brevet: **14.04.1993**
(21) Numéro de dépôt: 88401772.4
(22) Date de dépôt: 07.07.1988
(51) Int. Cl.: A01F 15/10

(54) **Ramasseuse-presse à balles parallélépipédiques**
Aufsammelpresse für quaderförmige Ballen
Pick-up baler for rectangular bales

(30) Priorité: 09.07.1987 FR 8709778
(43) Date de publication de la demande: 11.01.1989
(73) Titulaire: NEW HOLLAND BELGIUM N.V., B-8210 Zedelgem (BE)
(72) Inventeur: Mathis, Michel, F-85300 Challans (FR)
(74) Mandataire: Altenburg, Udo, Dipl.-Phys.

(56) Documents cités:
- DE-C- 960 938
- FR-A- 2 346 963
- US-A- 4 034 543

## Description

La présente invention concerne une ramasseuse-presse destinée à confectionner des balles de matières récoltées parallélépipédiques, ainsi que décrite par exemple dans le brevet français n^{o} 77 10 530 (numéro de publication 2 346 963).

Sans reprendre en détail la description de la machine on rappellera ici que le fourrage est ramassé du sol par un cylindre de relevage ou "pickup", puis introduit et précomprimé dans un canal de précompression débouchant latéralement dans une chambre de bottelage où va et vient un piston de bottelage.

A chaque recul du piston de bottelage, un mécanisme d'ameneur transfère la charge présente dans le canal de précompression jusque dans la chambre de bottelage. Le temps de transfert correspond au bref temps de recul du piston de sorte que la vitesse du mécanisme d'ameneur est élevée.

Habituellement, le mécanisme d'ameneur comporte une série de doigts qui, pénètrent des fentes ménagées sur la longueur du canal de précompression, et balaient ce canal sous l'action d'un entraînement à excentrique.

Les efforts mis en jeu dans ce mécanisme passent par un maximum lorsque les doigts d'ameneur pénètrent dans le canal de précompression et commencent à repousser la charge.

Par conséquent, lorsque la résistance exercée par la charge dépasse une valeur critique, les efforts dans le mécanisme d'ameneur dépassent le seuil de rupture d'un élément conçu comme élément sacrifié afin de préserver l'intégrité du reste du mécanisme.

Bien entendu, la résistance exercée par la charge dépend en premier lieu du taux de précompression atteint dans le canal de précompression. Cependant, on a constaté que cette résistance croît brusquement lorsque le taux d'hygrométrie des matières récoltées augmente au-delà d'un certain seuil, sans que les causes en soient clairement élucidées.

En première analyse, le dépassement d'un certain seuil d'hygrométrie entraîne une coalescence ou un bourrage des matières récoltées, ainsi qu'un collage de celles-ci contre les parois du canal de précompression.

Conformément à la présente invention, on pallie ces inconvénients en prévoyant que les parois du canal de précompression soient au moins partiellement réalisées en ou recouvertes d'un matériau choisi de telle sorte que la matière récoltée et bottelée à l'état humide présente une moindre résistance à l'avancement sur ce matériau que sur une paroi métallique.

Grâce à l'invention, l'effet de collage des matières récoltées contre les parois du canal de précompression sera fortement diminué, ainsi que par conséquent la résistance exercée par la charge sur le mécanisme d'ameneur lors de son transfert vers la chambre de bottelage.

On pourra donc envisager d'utiliser la ramasseuse-presse dans des circonstances considérées jusqu'ici comme impossibles, comme par exemple la récolte d'herbe à la tombée de la nuit lorsque son hygrométrie remonte brusquement, la récolte d'herbe dans des régions à climat très humide, ou encore la récolte d'herbe humique (demie séchée) spécifiquement destinée à l'ensilage.

Parmi les matériaux possibles pour réaliser ou recouvrir les parois du canal de précompression, on choisira des matériaux préservant une bonne résistance à l'abrasion, comme par exemple les polyamides (nylon) de forte masse moléculaire ou encore des polyéthylènes. On pourra également choisir des matériaux composites comprenant des fibres de verre enrobées dans une matrice en matière plastique. Selon l'invention, on pourra également choisir une matière métallique ayant reçu un traitement de surface spécial ou une application de peinture ou laque spéciale.

Parmi les parois du canal de précompression, celle qui est réalisée en priorité conformément aux enseignements de l'invention est la paroi concave située à l'opposé des doigts d'ameneur dans la mesure où le frottement des matières récoltées contre cette paroi a un effet prépondérant.

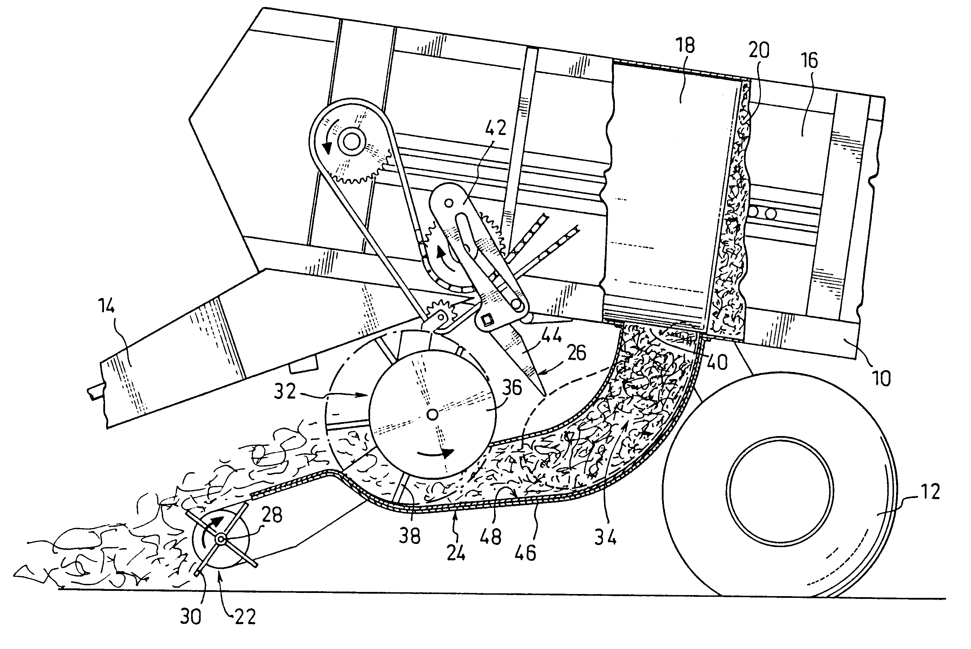

L'invention sera maintenant décrite en se référant aux dessins annexés dans lesquels
la figure unique est une vue en coupe longitudinale d'une ramasseuse-presse incorporant un perfectionnement selon la présente invention.

Pour l'essentiel, cette machine est conforme à celle qui est décrite dans le brevet français n^{o} 77 10 530 auquel on se reportera avantageusement.

Elle comporte un châssis 10 porté par des roues 12 et prolongé par un timon avant 14 par lequel elle peut être tractée par un véhicule tracteur (non représenté) et raccordée à une prise de force de ce dernier (non représentée).

A la partie supérieure du châssis est constituée une chambre de bottelage 16 parallélépipédique dans laquelle va et vient un piston 18 afin de comprimer le fourrage sous forme de balles parallélépipédiques 20 qui sont évacuées ensuite par l'arrière de la machine, vers la droite sur la figure.

Sous le châssis 10 sont fixés un certain nombre de dispositifs permettant de ramasser les matières récoltées au sol et de les amener jusqu'à la chambre de bottelage 16.

Dans le sens du trajet des matières récoltées, on trouve ainsi successivement :
un dispositif de relevage 22,
un dispositif de précompression 24, et
un mécanisme d'ameneur 26.

Le dispositif de relevage ou "pickup" 22 est constitué par un arbre 28 garni de multiples tiges 30 radiales et entraîné en rotation dans le sens horaire. Il est maintenu à faible hauteur au-dessus du sol, de telle sorte que lorsque la machine se déplace (vers la gauche sur la figure), il soulève les matières, préalablement récoltées et rassemblées en andains, au-dessus du sol et les dirige vers l'arrière en direction du dispositif de précompression 24.

Celui-ci est constitué d'un mécanisme d'alimentation 32 et d'un canal de précompression 34.

Le mécanisme d'alimentation est formé d'un cylindre 36 placé immédiatement au-dessus de l'entrée du canal de précompression 34, entraîné en rotation dans le sens antihoraire, et portant des doigts d'alimentation 38 qui se projettent d'une distance variable à partir du cylindre 36 de telle sorte que les doigts sont en extension maximale du côté du dispositif de relevage 22 et en rétraction complète du côté du canal de précompression 34.

Le canal de précompression forme un coude sensiblement en quart de cercle et se termine par une sortie 40 à la face inférieure de la chambre de bottelage. La cinématique du piston de bottelage est telle que le piston obture la sortie 40 pendant ses courses de va-et-vient dans la chambre et découvre cette sortie à la fin de ses courses de retour.

Le mécanisme d'alimentation 32 a donc pour rôle de forcer progressivement les matières récoltées dans le canal de précompression 24 et d'y constituer une charge de matières précomprimées qui se tassent progressivement contre le piston de bottelage, lequel fait office de butée à cet effet.

Enfin, le mécanisme d'ameneur 26 est constitué par des bras 42 portant des doigts 44 et entraînés par un dispositif d'entraînement qui imprime aux bras un mouvement complexe indiqué en pointillé en synchronisme avec les courses de va-et-vient du piston 18, comme décrit en détail dans le brevet français n^{o} 77 10 530 déjà cité.

Schématiquement, ce mouvement comprend un tronçon actif au cours duquel les doigts 44 pénètrent dans le canal, près de la base de celui-ci, en traversant des fentes longitudinales ménagées sur toute la longueur de la paroi supérieure du canal, puis balaient en remontant la longueur du canal pour repousser la charge précomprimée dans la chambre de bottelage à travers la sortie 40 tandis que celle-ci est découverte par le recul du piston 18.

Le mouvement des bras comprend ensuite un tronçon inactif de retour au cours duquel les doigts ressortent du canal de précompression au voisinage de sa sortie, puis basculent vers le bas, à l'extérieur du canal et jusqu'à la base de celui-ci.

Le mouvement actif des bras s'effectue sur un cycle très court et on observera que les efforts mis en jeu sont les plus importants au tout début de ce mouvement actif lorsque les doigts pénètrent le canal et commencent leur mouvement de balayage ascendant. En effet, le rapport entre le bras de levier résistant et le bras de levier moteur sur les bras du mécanisme est à ce moment-là le plus élevé.

Comme indiqué en introduction, tout accroissement de la résistance que la charge précomprimée exerce à l'encontre de son transfert vers la chambre de bottelage peut conduire à des détériorations des éléments d'entraînement, que l'on évite habituellement en prévoyant dans la chaîne cinématique un élément de moindre résistance ou élément sacrifié (non représenté) dont la rupture protège les autres éléments.

Conformément à l'invention, les parois du canal de précompression sont, au moins partiellement, réalisées en un matériau possédant une faible tension superficielle vis-à-vis de l'eau.

Suivant le mode de réalisation élémentaire illustré à la figure, les parois du canal de précompression sont réalisées en tôle métallique, et la paroi concave 46 située à l'opposé des doigts d'ameneur 44, est recouverte d'une plaque 48 d'un tel matériau.

Grâce à cet agencement, les forces de frottement entre les matières récoltées humides et la paroi concave 46 du canal seront notablement diminuées, ainsi que par voie de conséquence les efforts mis en jeu dans l'entraînement du dispositif d'ameneur.

Ce mode de réalisation se prête facilement à l'équipement de toutes machines, aussi bien lors de la fabrication, que lors d'un rééquipement ultérieur sans nécessiter une longue immobilisation de la machine.

Parmi les nombreuses variantes de réalisation, on pourra citer :
- le revêtement de toutes les parois du canal de précompression ; et en règle générale de toutes les parois ou organes de la machine en contact avec les matières récoltées : dispositif de relevage et chambre de bottelage notamment,
- la fabrication des parois du canal de précompression intégralement en un matériau ayant les propriétés sus indiquées, avec ou sans raidissage complémentaire selon la rigidité du matériau,
- le matériau en question pourra consister en un composite formé de matière plastique armée de fibres de verre -ou en général de fibres à haute ténacité,
- un matériau préféré est le polyamide (nylon).
- le revêtement pourra être appliqué sur les parois sous forme-de peinture, de laque ou encore sous forme d'un traitement de surface spécial.

## Revendications

1. Ramasseuse-presse destinée à confectionner des balles de matières récoltées parallélépipédiques comprenant un mécanisme d'alimentation et un canal de précompression, débouchant latéralement dans une chambre de bottelage dans laquelle va et vient un piston de bottelage, et un dispositif d'ameneur destiné à transférer les matières précomprimées dans le canal de précompression par le mécanisme d'alimentation depuis ce canal jusque dans la chambre de bottelage, caractérisée en ce que les parois du canal de précompression sont au moins partiellement réalisées en ou recouvertes d'un matériau choisi de telle sorte que la matière récoltée et bottelée à l'état humide présente une moindre résistance à l'avancement sur ce matériau que sur une paroi métallique.

2. Ramasseuse-presse selon la revendication 1, caractérisée en ce que ledit matériau est un polyamide de forte masse moléculaire.

3. Ramasseuse-presse selon la revendication 1, caractérisée en ce que ledit matériau est du polyéthylène.

4. Ramasseuse-presse selon la revendication 1, caractérisée en ce que les parois du canal de précompression sont réalisées en tôle métallique et que ledit matériau est appliqué sur ladite tôle métallique sous forme de peinture, laque ou traitement de surface.

5. Ramasseuse-presse selon la revendication 1, caractérisée en ce que ledit matériau est un composite comprenant une matrice de matière plastique armée de fibres à haute ténacité.

6. Ramasseuse-presse selon l'une quelconque des revendications 1 à 5, caractérisée en ce que seule la paroi du canal de précompression de forme concave et opposée au dispositif d'ameneur est réalisée, ou recouverte, en un tel matériau.

7. Ramasseuse-presse selon l'une quelconque des revendications 1 à 6, caractérisée en ce qu'elle comporte des revêtements en un tel matériau sur tout ou partie de ses autres parois ou éléments destinés à être en contact avec les matières récoltées.

## Claims

1. In a pickup baler for making parallelepipedic bales of cropped materials, comprising a supply mechanism and a precompression channel, opening laterally into a baling chamber in which a baling plunger moves in reciprocating motion, and a feeding device for transferring the material precompressed by the supply mechanism within the precompression channel from this channel up to the baling chamber, characterized in that the walls of the precompression channel are at least partially made of or coated with a material selected in such a way that the cropped and baled material when humid presents a least resistance on said material than on a metallic wall.

2. Pickup baler according to claim 1, characterized in that said material is a polyamide of high molecular mass.

3. Pickup baler according to claim 1, characterized in that said material is polyethylene.

4. Pickup baler according to claim 1, characterized in that the walls of the precompression channel are made of sheet metal and in that said material is applied on said sheet metal in the form of paint, lacquer or surface treatment.

5. Pickup baler according to claim 1, characterized in that said material is a composite comprising a matrix of plastic material reinforced with high-strength fibers.

6. Pickup baler according to any one of claims 1 to 5, characterized in that only the wall of the precompression channel which is of concave shape and opposite the feeding device is made of, or coated with, such a material.

7. Pickup baler according to any one of claims 1 to 6, characterized in that it comprises coatings of such a material over all or part of its other walls or elements intended to be in contact with the cropped materials.

## Patentansprüche

1. Erntegerät zur Herstellung von quaderförmigen Erntegutballen, bestehend aus einem Aufnahmemechanismus sowie einem Vorkompressionskanal, welcher seitlich in eine Komprimierkammer einmündet, in der ein Komprimierkolben hin- und herbewegbar ist, wobei zusätzlich ein Zuführmechanismus vorgesehen ist, mit welchem das von dem Aufnahmemechanismus abgegebene vorkomprimierte Erntegut über den Vorkomprimierkanal bis in die Komprimierkammer gefördert wird, dadurch **gekennzeichnet,** daß die Wandungen des Vorkomprimierkanals wenigstens teilweise aus einem Material hergestellt oder mit demselben bedeckt sind, welches gegenüber dem aufgenommenen und komprimierten Erntegut auch im feuchten Zustand einen geringeren Förderwiderstand als eine metallische Wandung entgegenstellt.

2. Erntegerät nach Anspruch 1 dadurch **gekennzeichnet,** daß das Material ein hochmolekulares Polyamid ist.

3. Erntegerät nach Anspruch 1 dadurch **gekennzeichnet,** daß das Material Polyethylen ist.

4. Erntegerät nach Anspruch 1 dadurch **gekennzeichnet,** daß die Wandungen des Vorkompressionskanals aus einem Metallblech bestehen, und daß das gleitfähige Material in Form einer Farbe, eines Lacks oder einer Oberflächenbehandlung auf dem Metallblech aufgebracht ist.

5. Erntegerät nach Anspruch 1 dadurch **gekennzeichnet,** daß das Material ein zusammengesetztes Material ist, welches aus einem Kunststoffmaterial besteht, in dem Fasern hoher mechanischer Festigkeit eingebettet sind.

6. Erntegerät nach einem der Ansprüche 1 bis 5 dadurch **gekennzeichnet,** daß allein der konkav und gegenüberliegend zu dem Zuführmechanismus angeordnete Teil der Wandung des Vorkompressionskanals aus dem gleitfähigen Material hergestellt bzw. mit demselben beschichtet ist.

7. Erntegerät nach einem der Ansprüche 1 bis 6 dadurch **gekennzeichnet,** daß alle oder ein Teil der anderen Wandungen oder Elemente, welche in Berührung mit dem Erntegut gelangen, mit einer Beschichtung aus einem derartigen Material versehen sind.
